# EUROPÄISCHE PATENTSCHRIFT

(11) **EP 0 439 425 B1**
(45) Veröffentlichungstag und Bekanntmachung des Hinweises auf die Patenterteilung: **14.04.1993**
(21) Anmeldenummer: 91810028.0
(22) Anmeldetag: 15.01.1991
(51) Int. Cl.: B24B 13/06, B23Q 1/14

(54) **Vorrichtung zum Herstellen einer Kontaktlinse mit insbesondere asphärischer Vorder- und/oder Rückfläche**
Device for machining an ophthalmic lens with, in particular, aspheric surfaces
Dispositif pour la fabrication d'une lentille ophtalmique avec, en particulier, des surfaces asphériques

(30) Priorität: 24.01.1990 CH 225/90
(43) Veröffentlichungstag der Anmeldung: 31.07.1991
(73) Patentinhaber: CIBA-GEIGY AG, 4002 Basel (CH)
(72) Erfinder: Hagmann, Peter, Dr., W-8759 Hösbach-Bahnhof (DE); Höfer, Peter, W-8750 Aschaffenburg (DE)

(56) Entgegenhaltungen:
- EP-A- 0 359 084
- DE-A- 3 820 085
- DE-C- 3 110 624
- DE-U- 8 513 146
- JP-A-60 114 457
- US-A- 3 492 894
- US-A- 4 307 046

## Beschreibung

Die Erfindung betrifft eine Vorrichtung zum Herstellen einer Kontaktlinse mit insbesondere asphärischer Vorder- und/oder Rückfläche durch materialabtragende Formgebung mit einer in einem Spindelstock drehbar gelagerten Spindel, an welcher ein um die Spindelachse mit der Spindel drehbarer Linsenrohling befestigbar ist, einem gegenüber dem Linsenrohling verstellbaren materialabtragenden Werkzeug und einer Einstelleinrichtung, mit welcher eine Stellbewegung des Werkzeugs gegenüber dem Linsenrohling während der Formgebung einstellbar ist.

Eine derartige Vorrichtung ist aus der DE 31 10 624 C2 bekannt. Bei der bekannten Vorrichtung werden zur Einstellung bzw. Veränderung des Schwenkradiusses des als Drehwerkzeugs ausgebildeten materialabtragenden Werkzeugs gegenüber der Schwenkachse während des formgebenden Arbeitsganges Schablonen verwendet. Die Schablone besitzt Steuerflächen, welche von einer Abtasteinrichtung abgetastet werden, und die Abtastbewegung wird auf das spanende Drehwerkzeug zur Schwenkradiusänderung des Drehwerkzeugs übertragen. Auf diese Weise lassen sich Kontaktlinsen mit unterschiedlilichen Vorder- und/oder Rückflächengeometrien herstellen. Beispielsweise lassen sich asphärische Rückflächengeometrien oder auch multifokale, insbesondere bifokale Kontaktlinsen durch spanende Formgebung aus einem Linsenrohling fertigen.

Der Einsatz derartiger Steuerschablonen erfordert eine präzise mechanische Herstellung und Justierung dieser Teile. Dies ist in vielen Anwendungsfällen nur mit relativ großem Aufwand möglich. Ferner ist für unterschiedliche Geometrien ein Steuerschablonensatz erforderlich. Die jeweilige Umstellung auf unterschiedliche Geometrien erfordert relativ lange Rüstzeiten, wodurch der Automatisierungsgrad bei der Linsenherstellung beeinträchtigt ist.

Auch werden numerisch gesteuerte Drehautomaten zum Einsatz gebracht. Derartige CNC-Drehautomaten sind jedoch relativ aufwendig. Ferner lassen sich mit diesen Drehautomaten keine kontinuierlichen Konturen herstellen, da die Verstellung des Werkzeugs bzw. Werkstücks schrittweise mit kleinen Schritten erfolgt, die in einem optimalen Fall immerhin noch 0,1 Mikron betragen. Hierdurch ist bei der Herstellung von Kontaktlinsen ein zusätzlicher Polierschritt erforderlich, um eine glatte Linsenoberfläche zu erhalten. Dabei ergibt sich natürlich das Risiko, daß während des Polierschrittes Konturfehler an der Kontaktlinsenoberfläche auftreten.

Aufgabe der Erfindung ist es daher, eine Vorrichtung der eingangs genannten Art zu schaffen, bei der eine Feineinstellung des Schwenkradiusses des materialabtragenden Werkzeuges gegenüber seiner Schwenkachse mit Positionsänderungen im nm-Bereich erzielt wird.

Diese Aufgabe wird bei der Vorrichtung der eingangs genannten Art erfindungsgemäß dadurch gelöst, daß die Einstelleinrichtung einen piezoelektrischen Antrieb aufweist, der während der Formgebung eine Stellbewegung für das Werkzeug erzeugt. Mit einem derartigen piezoelektrischen Antrieb in der Einstelleinrichtung läßt sich eine Relativbewegung zwischen dem Linsenrohling und dem Werkzeug, das bevorzugt als Drehdiamant oder auch als Laser ausgebildet sein kann, durch geringste Positionsänderungen im nm-Bereich erzielen, wobei Gesamtstellwege bis zu einigen 100 Mikron und, falls erforderlich, bis in den Millimeterbereich möglich sind. Auf diese Weise läßt sich bei einer bevorzugten Ausführungsform durch die lineare Stellbewegung, welche die piezoelektrische Antriebseinrichtung auf das Werkzeug ausübt, in Kombination mit der Schwenkbewegung, die das Werkzeug um seine Schwenkachse während der materialabtragenden Formgebung ausführt, praktisch jede herzustellende Kontaktlinsengeometrie, und zwar auch nicht rotationssymmetrische Linsengeometrien, an der Frontfläche und/oder Rückfläche fertigen.

Bei einer weiteren Ausführungsform ist das materialabtragende Werkzeug in Richtung der und parallel zur Spindelachse sowie in einer dazu senkrechten Richtung gegenüber dem Linsenrohling einstellbar. Ferner kann bei dieser Ausführungsform der piezoelektrische Antrieb mit dem materialabtragenden Werkzeug geradlinig in Richtung der und parallel zur Spindelachse sowie senkrecht dazu an der Schlittenführung geführt sein. Die Wirkrichtung des piezoelektrischen Antriebs ist hierbei bevorzugt in Richtung der und parallel zur Spindelachse ausgerichtet.

Bei dem Linsenrohling kann es sich um einen noch nicht vorgeformten Ausgangskörper oder um schon teilweise vorgeformte Körper, wie z. B. einen etwa schalenförmigen Rohling (EP O 299 628 A1 oder US-PS 4 761 436), bei dem ein relativ geringer Materialabtrag noch erforderlich ist, handeln.

Aufgrund der praktisch unbegrenzten Auflösung des piezoelektrischen Antriebssystems lassen sich an der Front- und/oder Rückfläche und dem die beiden Flächen verbindenden Übergangsbereich der Kontaktlinse glatte Flächen erreichen, bei denen weitere Nachbearbeitungsschritte, wie z. B. Polieren zur Verbesserung der Oberflächenqualität, überflüssig sind. Die Oberflächenqualität läßt sich noch dadurch erhöhen, daß luftgelagerte oder hydraulisch gelagerte Spindeln verwendet werden.

Die Stellbewegung des piezoelektrischen Antriebs wird bevorzugt in Abhängigkeit vom Schwenkwinkel, den das Werkzeug um seine Schwenkachse einnimmt, gesteuert. Hierzu führt in bevorzugter Weise der piezoelektrische Antrieb die Schwenkbewegung des Werkzeugs mit aus. In vorteilhafter Weise kann daher der piezoelektrische Antrieb an einer um die Schwenkachse schwenkbaren Schlittenführung gelagert sein, an welcher auch das Werkzeug in radialer Richtung zur Schwenkachse geführt ist.

Zum Beispiel kann der piezoelektrische Antrieb als Piezotranslator ausgebildet sein, der seine Stellbewegung in einer Längsachse ausführt. Am einen Ende ist der Piezotranslator an einem an der Schlittenführung geführten Schlitten, an welchem auch ein Werkzeughalter für das insbesondere als Drehwerkzeug ausgebildete Werkzeug gelagert ist, abgestützt, und an seinem anderen Ende ist der Piezotranslator am Werkzeughalter abgestützt. In bevorzugter Weise ist dabei der Werkzeughater mit Federvorspannung gegen den piezoelektrischen Antrieb abgestützt. Es ist auch möglich, das Werkzeug direkt auf den piezoelektrischen Antrieb (Piezotranslator), der am Werkzeughalter abgestützt ist, aufzusetzen. Der piezoelektrische Antrieb kann auch aus mehreren Piezotranslatoren bestehen, die in radialer Richtung zur Schwenkachse hintereinander angeordnet sind und wahlweise zur Erzeugung der Stellbewegung angesteuert werden können.

Zur Erzielung der gewünschten Kontaktlinsengeometrie an der Vorder- und/oder Rückfläche kann die Betriebsspannung des piezoelektrischen Antriebs in Abhängigkeit vom Schwenkwinkel des Werkzeugs um die Schwenkachse eingestellt werden. Diese Einstellung kann durch eine Regeleinrichtung überwacht werden. Hierzu kann ein Sensor für die Ist-Stellbewegung des piezoelektrischen Antriebs an eine Rechnereinheit angeschlossen sein. Ferner kann die Rechnereinheit einen durch die gewünschte Linsengeometrie für jeweilige Schwenkwinkel des Werkzeugs vorgegebene Sollwerte der Stellbewegung des piezoelektrischen Antriebs empfangen und/oder speichern. Die Betriebsspannung für den piezoelektrischen Antrieb wird dann in Abhängigkeit vom Sollwert-Istwertvergleich eingestellt.

Zur Grobeinstellung des Schwenkradiusses des Werkzeugs um seine Schwenkachse kann der Schlitten, an welchem das Werkzeug gelagert ist, an der Schlittenführung linear verstellbar sein. Die Grobeinstellung kann auch durch den Rechner geregelt werden.

Der piezoelektrische Antrieb kann auch als eine direkt auf das Werkzeug einwirkende Piezotranslatoreinrichtung ausgebildet sein. Hierzu kann in bevorzugter Weise der Piezotranslator die Funktion des Werkzeughalters übernehmen.

Es ist auch möglich, den piezoelektrischen Antrieb aus zwei Piezotranslatoreinrichtungen zusammenzusetzen, nämlich eine Piezotranslatoreinrichtung, welche, wie oben schon erläutert, auf den Werkzeughalter wirkt, und eine zweite Piezotranslatoreinrichtung, welche direkt auf das Werkzeug wirkt, beispielsweise den Werkzeughalter bildet. Hierbei kann die auf den Werkzeughalter einwirkende Piezotranslatoreinrichtung im Zusammenhang mit der Grobeinstellung verwendet werden, und die Piezotranslatoreinrichtung, welche als Werkzeughalter ausgebildet ist, im Zusammenhang mit der Feineinstellung des Werkzeuges verwendet werden.

Außerdem ist es möglich, die Werkzeugeinstellung zusätzlich durch eine Schablone zu steuern, mit welcher beispielsweise bei der Herstellung multifokaler Linsen Grundgeometrien eingestellt werden, während die Feineinstellung über den piezoelektrischen Antrieb erfolgt. Hierfür ist ein Schablonensatz mit einer nur geringen Anzahl von Einzelschablonen erforderlich. Die Anordnung der Schablonen und die Steuerung mit Hilfe der Schablonen kann in der Weise erfolgen, wie sie in der deutschen Patentschrift 31 10 624 beschrieben ist.

Eine Erhöhung der Genauigkeit, und insbesondere eine Kompensation von Werkzeugverschleiß bei der Herstellung der gewünschten Linsengeometrie, läßt sich dadurch erzielen, daß die Einstellung des Werkzeugs ferner in Abhängigkeit vom Ausgangssignal einer Oberflächenmeßeinrichtung gesteuert wird, welche die vom Werkzeug hergestellte Istgeometrie an der Linse bevorzugt durch berührungslose Abtastung erfaßt.

Es lassen sich Kontaktlinsen mit beliebigen Geometrien, d.h. auch solche mit nicht rotationssymmetrischen Geometrien, reproduzierbar herstellen, wobei ein hoher Automatisierungsgrad erreicht wird. Es ist lediglich erforderlich, die gewünschte Kontaktlinsengeometrie in eine Speichereinrichtung der elektronischen Steuerung der Einstelleinrichtung einzugeben. Es können Kontaktlinsen mit asphärischen Vorder-und/oder Rückflächen hergestellt werden, und es kann eine genaue Anpassung vor allem der Rückflächen der Linsen an die jeweiligen Hornhautoberflächen des Kontaktlinsenträgers vorgenommen werden. Außerdem lassen sich ohne weiteres multifokale, insbesondere bifokale Kortaktlinsen für die Versorgung von presbyopen Patienten herstellen.

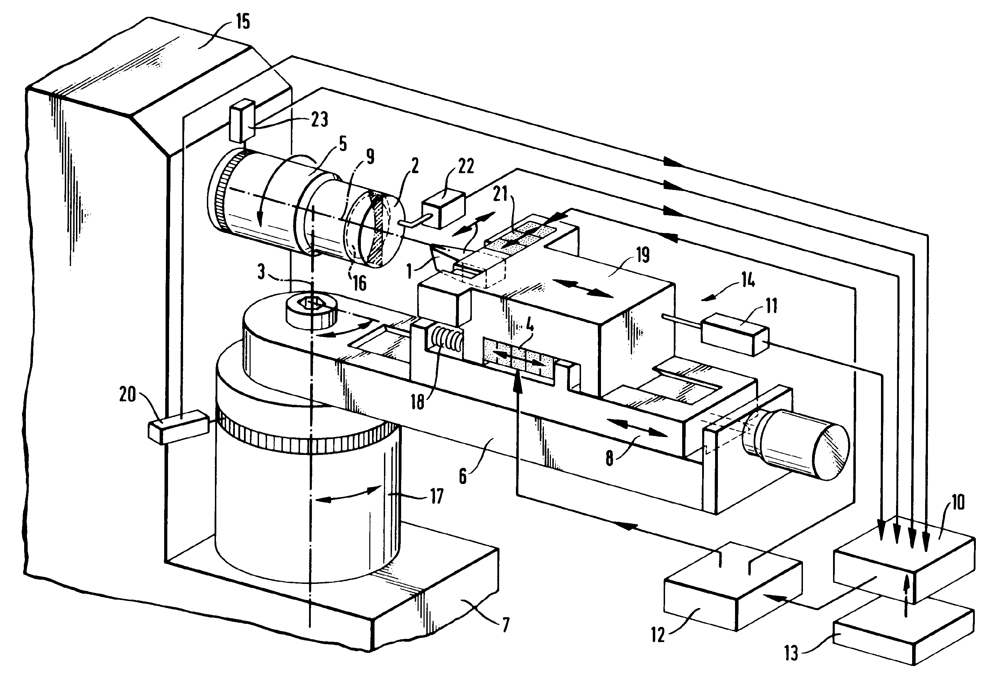

Anhand der beiliegenden Figur wird an einem Ausführungsbeispiel die Erfindung noch näher erläutert.

Die Figur zeigt in schematischer Darstellung eine Drehmaschine mit elektronischer Steuerung für einen piezoelektrischen Antrieb zur Feineinstellung des Schwenkradiusses des Drehwerkzeugs, wobei die elektronische Steuer- bzw. Regeleinrichtung als Blockschaltbild dargestellt ist.

Die dargestellte Drehbank ist auf einem Maschinenbett 7 angeordnet und weist einen Spindelstock 15 auf, in welchem eine Spindel 5 drehbar gelagert ist. Die Spindel 5 kann in einem an sich bekannten Luft- oder Hydrauliklager gelagert sein und durch einen nicht näher dargestellten Antrieb in Drehung um ihre Spindelachse versetzt werden. Die Spindel 5 besitzt eine Spindelspitze 16, z. B. in Form einer an der Spindel befestigten Kalotte, an welcher mit Hilfe eines geeigneten Bestigungsmittels, z. B. Kitt, ein Linsenrohling 2 befestigt werden kann. Die Drehbank besitzt ferner einen säulenartigen Drehsupport 17, der um eine Schwenkachse 3 schwenkbar ist. An dem Drehsupport 17 ist eine Schlittenführung 6 befestigt. Es ist jedoch auch möglich, daß die Schlittenführung 6 an dem Drehsupport 17 um die Schwenkachse 3 schwenkbar gelagert ist und der Drehsupport 17 am Maschinenbett 7 ortsfest gelagert ist. An der Schlittenführung 6 ist ein Werkzeugschlitten 8 linear und in radialer Richtung zur Schwenkachse bewegbar geführt. Am Werkzeugschlitten 8 ist ein Werkzeughalter 19 für ein Drehwerkzeug 1, insbesondere einen Drehdiamanten, gelagert. Der Werkzeugschlitten 8 kann zur Grobeinstellung des Schwenkradiusses des Drehwerkzeugs 1 um die Schwenkachse 3, beispielsweise mit Hilfe eines nicht näher dargestellten Motorantriebs oder auch eines Handkurbelantriebs, entlang der Schlittenführung 6 bewegt werden. Die Grobeinstellung kann durch Steuerung einer Rechnereinheit 10 erfolgen.

Zur Feineinstellung des Schwenkradiusses des bevorzugt als Drehwerkzeug 1 ausgebildeten materialabtragenden Werkzeugs um die Schwenkachse 3 bei der Linsenherstellung besitzt bei dem dargestellten Ausführungsbeispiel einer Drehbank eine Einstelleinrichtung 14 einen piezoelektrischen Antrieb, der beim dargestellten Ausführungsbeispiel aus zwei Piezotranslatoreinrichtungen 4 und 21 besteht. Derartige piezoelektrische Antriebe sind beispielsweise aus PI, Physik Instrumente, Piezo Guide, Teil 1, Piezostelltechnik in Theorie und Praxis bekannt. Bevorzugt handelt es sich bei dem verwendeten piezoelektrischen Antrieb um Piezotranslatoren, welche in ihrer Längsachse in Abhängigkeit einer angelegten Betriebsspannung Stellbewegungen ausführen. Rasche Ausdehnungen mit kleinen Ansprechzeiten sind für derartige piezoelektrische Antriebe ein herausragendes Merkmal. Bevorzugt bestehen derartige piezoelektrische Antriebe aus PZT(Blei-Zirkonium-Titanat)-Keramiken. Aufgrund einer angelegten Betriebsspannung wird durch die sprunghaft erhöhte elektrische Feldstärke eine fast verzögerungsfreie Längenänderung des Piezotranslators erreicht.

Diese Eigenschaften des piezoelektrischen Antriebs werden bei der Erfindung vor allem zur Feineinstellung des Schwenkradiusses des Schwenkwerkzeugs um die Schwenkachse 3 ausgenützt.

In vorteilhafter Weise können mehrere Piezotranslatoren hintereinander angeordnet sein und eine Kette bilden. Es kann dann eine wahlweise Ansteuerung der einzelnen Piezotranslatoren erfolgen in Abhängigkeit von der gewünschten Längenänderung bzw. Stellbewegung. Das Ausdehnungsverhalten der einzelnen Piezotranslatoren läßt sich dann für die zu erzielende Stellbewegung durch entsprechende Ansteuerung kombinieren. Hierdurch läßt sich nicht nur die Feineinstellung, sondern auch die Grobeinstellung erreichen.

Die Steuereinrichtung zur Steuerung einer Betriebsspannung für den piezoelektrischen Antrieb, welche beim Ausführungsbeispiel von einem Spannungsverstärker 12 geliefert wird, besitzt die Rechnereinheit 10. Diese Rechnereinheit 10 empfängt Daten zur gewünschten Kontaktlinsengeometrie von einer Speichereinrichtung 13, die auch als Geometrieeingabeeinrichtung ausgebildet sein kann. Die Rechnereinheit 10 setzt diese Kontaktlinsengeometrien für die Vorder- und/oder Rückfläche der herzustellenden Kontaktlinse in jeweiligen Schwenkwinkeln des Drehwerkzeugs 1 um der Schwenkachse zugeordneten Radiuswerten des Drehwerkzeugs 1 in Bezug auf die Schwenkachse 3 um. Der jeweilige Ist-Schwenkradius des Drehwerkzeugs 1 läßt sich mit Hilfe eines Sensors 11 abtasten. Das Ausgangssignal des Sensors 11 wird ebenfalls der Rechnereinheit 10 zugeführt. Ferner wird der Rechnereinheit 10 der jeweilige Schwenkwinkel, den das Drehwerkzeug, ausgehend von einer Nullposition, um die Schwenkachse 3 einnimmt, zugeführt. Hierzu ist ein Winkelsensor 20 vorgesehen.

Beim spanenden Bearbeitungsvorgang wird das Drehwerkzeug 1 auf den Linsenrohling 2 aufgesetzt. Zur Grobeinstellung kann der Werkzeugschlitten 8 durch Handbetrieb oder durch nicht näher dargestellten elektromotorischen Antrieb linear an der Schlittenführung 6, gegebenenfalls gesteuert durch die Rechnereinheit 10, bewegt werden. Zur Feineinstellung des Schwenkradiusses des Drehwerkzeugs 1 bei der Herstellung der endgültigen gewünschten Linsengeometrie steuert die Rechnereinheit 10 den Spannungsverstärker 12 entsprechend an, so daß dieser eine Betriebsspannung für den piezoelektrischen Antrieb, bestehend aus den beiden Piezotranslatoreinrichtungen 4 und 21, liefert, wodurch eine Stellbewegung herbeiführt wird. Diese Stellbewegung des piezoelektrischen Antriebs ist durch die gespeicherten Werte der Schwenkradien des Drehwerkzeugs 1, welche von den Schwenkwinkeln des Werkzeugs aufgrund der eingegebenen Kontaktlinsengeometrie abhängen, bestimmt. Dabei kann ferner durch den Sensor 11 die dem Werkzeug 1 aufgeprägte Stellbewegung abgetastet werden und mit einer Sollwertstellung verglichen werden, so daß aufgrund dieses Sollwert-Istwertvergleichs eine geregelte Betriebsspannungsversorgung des piezoelektrischen Antriebs erreicht wird. Auf diese Weise werden gegebenenfalls Hystereseeigenschaften des piezoelektrischen Antriebs und auch Toleranzen bei der Bewegungsübertragung zwischen dem piezoelektrischen Antrieb auf den Werkzeughalter 19 kompensiert.

Beim dargestellten Ausführungsbeispiel besteht der piezoelektrische Antrieb aus der direkt auf das Werkzeug 1 einwirkenden Piezotranslatoreinrichtung 21 und der auf den Werkzeughalter 19 einwirkenden Piezotranslatoreinrichtung 4. Die Piezotranslatoreinrichtung 21, welche aus einem Piezotranslator oder mehreren hintereinander geschalteten Piezotranslatoren bestehen kann, dient als Werkzeugträger. Auf diese Weise wird eine direkte Stellbewegungsübertragung auf das Werkzeug 1 gewährleistet. Die Piezotranslatoreinrichtung 21 eignet sich daher für eine Feinsteinstellung.

Die zweite Piezotranslatoreinrichtung 4 ist an ihrem einen Ende an dem Werkzeugschlitten 8 abgestützt und mit ihrem anderen Ende am Werkzeughalter 19. Die Piezotranslatoreinrichtung 4 kann ebenfalls aus einem Piezotranslator oder aus mehreren hintereinander geschalteten Piezotranslatoren bestehen. Die Piezotranslatoreinrichtung 4 kann auch im Zusammenhang mit der Grobeinstellung des Werkzeugs 1 zum Einsatz kommen, wobei dann die Fein- bzw. Feinsteinstellung, wie schon erläutert, durch die Piezotranslatoreinrichtung 21 gewährleistet wird.

Stellbewegungen der Piezotranslatoreinrichtung 4 erfolgen gegen die Vorspannkraft einer Feder 18. Hierdurch ist gewährleistet, daß bei einer Richrungsänderung der Stellbewegung der Piezotranslatoreinrichtung 4 das Werkzeug diese Richtungsänderung mitausführt.

Anstelle der beiden Piezotranslatoreinrichtungen 4 und 21 ist es auch möglich, nur eine der beiden Piezotranslatoreinrichtungen für die Feineinstellung zu verwenden. Es kann sich hier um die Piezotranslatoreinrichtung 4, welche an den Werkzeughalter 19 angreift, oder um die Piezotranslatoreinrichtung 21, welche direkt auf das Werkzeug 1 einwirkt, handeln.

Während sich der Linsenrohling 2 um die Spindelachse 9 dreht, führt das Drehwerkzeug 1 in der Ebene der Spindelachse 9 die schon angesprochene Schwenkbewegung um die Schwenkachse 3 aus und erzeugt auf diese Weise an der herzustellenden Linse die gewünschte Geometrie.

Zusätzlich kann eine Abtastvorrichtung für die Abtastung einer Schablone noch vorgesehen sein. Diese Anordnung ist in der Figur nicht dargestellt. Sie kann in der Weise ausgebildet sein, wie es aus der DE-PS 31 10 624 bekannt ist. Durch die Schablone läßt sich dabei eine Grundgeometrie, beispielsweise bei der Herstellung von multifokalen Linsen, gewinnen.

Um eine hohe Genauigkeit der herzustellenden Kontaktlinsengeometrie zu erreichen, kann die vom Werkzeug 1 an der Linse hergestellte Geometrie berührungslos abgetastet werden. Hierzu eignet sich eine berührungslos abtastende Oberflächenmeßeinrichtung 22. Es kann sich hierbei beispielsweise um eine mit Hilfe eines Laserstrahles abtastende Oberflächenmeßeinrichtung bekannter Art handeln. Hierbei wird auf die zu messende Oberfläche ein Laserstrahl fokussiert, und mit Hilfe eines Detektors wird das von der Oberfläche zurückgestreute Licht analysiert. Weicht der Fokus von der Oberfläche ab, so gibt der Detektor ein Signal für das Nachfahren der Optik, wobei der Nachführweg für die Bestimmung des Oberflächenprofils ausgewertet wird.

Das Ausgangssignal der Oberflächenmeßeinrichtung 22 wird der zentralen Rechnereinheit 10 zugeleitet, welche dann zusätzlich in Abhängigkeit von der festgestellten Istgeometrie der Linse eine entsprechende Ansteuerung des piezoelektrischen Antriebs veranlaßt. In vorteilhafter Weise kann hierdurch ein Verschleiß des Werkzeuges erfaßt und bei der Linsenherstellung kompensiert werden.

Zur Herstellung nicht rotationssymmetrischer Linsengeometrie ist es von Vorteil, den Rotationswinkel der Spindel 5 um die Spindelachse 9 mithilfe einer Sensoreinrichtung 23 abzutasten. Die Sensoreinrichtung 23 liefert ein entsprechendes Rotationswinkelsignal an die Rechnereinheit 10. Die Rechnereinheit 10 liefert dann ein entsprechendes Steuersignal zu dem piezoelektrischen Antrieb 4 bzw. 21. Hierdurch wird dann in Abhängigkeit vom jeweiligen Rotationswinkel die Stellbewegung des piezoelektrischen Antriebs 4 bzw. 21 auf das Werkzeug 1 gesteuert.

Bei der in der Figur dargestellten Einstelleinrichtung 14 kann der Werkzeugschlitten 8 geradlinig in Richtung der Spindelachse 9 und parallel dazu sowie senkrecht zu dieser Richtung an der Schlittenführung 6 geführt sein. Das heißt, es wird hierdurch das Werkzeug 1 und der zugeordnete piezoelektrische Antrieb 4, 21 ebenfalls in diesen zueinander senkrechten Richtungen an der Schlittenführung 6 gegenüber dem Linsenrohling 2 geführt. Bei dieser Ausführungsform ist es nicht erforderlich, daß die Schlittenführung 6 um die Drehachse 3 am Support 17 schwenkbar gelagert ist. Die Schlittenführung 6 kann vielmehr ortsfest am Support 17 dann gelagert sein.

## Patentansprüche

1. Vorrichtung zum Herstellen einer Kontaktlinse mit insbesondere asphärischer Vorder- und/oder Rückfläche durch materialabtragende Formgebung mit einer in einem Spindelstock (15) drehbar gelagerten Spindel (5), in welcher ein um die Spindelachse mit der Spindel (5) drehbarer Linsenrohling (2) befestigbar ist, einem gegenüber dem Linsenrohling (2) verstellbaren materialabtragenden Werkzeug (1) und einer Einstelleinrichtung (14), mit welcher eine Stellbewegung des Werkzeuges (1) gegenüber dem Linsenrohling (2) während der Formgebung einstellbar ist, dadurch gekennzeichnet, daß die Einstelleinrichtung (14) einen piezoelektrischen Antrieb (4, 21) aufweist, der während der Formgebung eine Stellbewegung für das Werkzeug (1) erzeugt.

2. Vorrichtung nach Anspruch 1, dadurch gekennzeichnet, daß das materialabtragende Werkzeug (1) um eine zur Spindelachse (9) senkrechte Schwenkachse (3) schwenkbar ist und die Stellberegung des piezoelektrischen Antriebs (4, 21) für die Schwenkradiuseinstellung des Werkzeugs (1) vom Schwenkwinkel des Werkzeugs (1) um die Schwenkachse (3) abhängig ist.

3. Vorrichtung nach Anspruch 1, dadurch gekennzeichnet, daß das materialabtragende Werkzeug (1) durch die Einstelleinrichtung (14) in Richtung der und parallel zur Spindelachse (9) und in einer dazu senkrechten Richtung einstellbar ist, und daß der piezoelektrische Antrieb (4, 21) wenigstens in Richtung der und parallel zur Spindelachse (9) für das materialabtragende Werkzeug (1) eine Stellbewegung liefert.

4. Vorrichtung nach einem der Ansprüche 1 bis 3, dadurch gekennzeichnet, daß der piezoelektrische Antrieb (4, 21) an einer Schlittenführung (6), an welcher das Werkzeug (1) geführt ist, gelagert ist.

5. Vorrichtung nach Anspruch 4, dadurch gekennzeichnet, daß der piezoelektrische Antrieb (4, 21) an der um die Schwenkachse (3) schwenkbaren Schlittenführung (6), an welcher das Werkzeug (1) in radialer Richtung zur Schwenkachse (3) geführt ist, gelagert ist.

6. Vorrichtung nach Anspruch 3 und 4, dadurch gekennzeichnet, daß der piezoelektrische Antrieb (4, 21) mit dem materialabtragenden Werkzeug (1) geradlinig in Richtung der und parallel zur Spindelachse (9) sowie senkrecht dazu an der Schlittenführung (6) geführt ist.

7. Vorrichtung nach einem der Ansprüche 1 bis 6, dadurch gekennzeichnet, daß der piezoelektrische Antrieb (4, 21) eine Piezotranslatoreinrichtung (4) aufweist, deren eines Ende an einem an der Schlittenführung (6) geführten Schlitten (8), an welchem ein Werkzeughalter (19) für das Werkzeug (1) gelagert ist, abgestützt ist und deren anderes Ende am Werkzeughalter (19) abgestützt ist.

8. Vorrichtung nach einem der Ansprüche 1 bis 7, dadurch gekennzeichnet, daß der Werkzeughalter (19) mit Vorspannung gegen die Piezotranslatoreinrichtung (4) abgestützt ist.

9. Vorrichtung nach einem der Ansprüche 1 bis 8, dadurch gekennzeichnet, daß die Piezotranslatoreinrichtung (4) aus mehreren in radialer Richtung zur Schwenkachse (3) hintereinander angeordneten Piezotranslatoren besteht.

10. Vorrichtung nach einem der Ansprüche 1 bis 9, dadurch gekennzeichnet, daß der piezoelektrische Antrieb (4, 21) eine direkt auf das Werkzeug (1) einwirkende Piezotranslatoreinrichtung (21) aufweist.

11. Vorrichtung nach Anspruch 10, dadurch gekennzeichnet, daß die Piezotranslatoreinrichtung (21) als Werkzeughalter ausgebildet ist.

12. Vorrichtung nach einem der Ansprüche 1 bis 11, dadurch gekennzeichnet, daß die direkt auf das Werkzeug (1) einwirkende Piezotranslatoreinrichtung (21) zur Feineinstellung des Werkzeugs (1) und die auf den Werkzeughalter (19 bzw. 21) wirkende Piezotranslatoreinrichtung (4) zur Grobeinstellung des Werkzeugs (1) dient.

13. Vorrichtung nach einem der Ansprüche 1 bis 12, dadurch gekennzeichnet, daß die Werkzeugeinstellung zusätzlich durch eine Schablone gesteuert ist.

14. Vorrichtung nach einem der Ansprüche 1 oder 2, dadurch gekennzeichnet, daß zur Erzielung der gewünschten Geometrie an der Vorder- und/oder Rückfläche der Linse die Betriebsspannung des piezoelektrischen Antriebs (4, 21) in Abhängigkeit vom Schwenkwinkel des Werkzeugs (1) um die Schwenkachse (3) eingestellt ist.

15. Vorrichtung nach einem der Ansprüche 1 bis 14, dadurch gekennzeichnet, daß ein Sensor (11) für die Ist-Stellbewegung des piezoelektrischen Antriebs (4, 21) an eine Rechnereinheit (10) angeschlossen ist, daß die Rechnereinheit (10) ferner einen durch die gewünschte Linsengeometrie für jeweilige Schwenkwinkel des Werkzeugs (1) vorgegebene Sollwerte der Stellbewegung empfängt bzw. speichert, und daß die Betriebsspannung für den piezoelektrischen Antrieb (4, 21) in Abhängigkeit vom Sollwert-Istwertvergleich eingestellt ist.

16. Vorrichtung nach einem der Ansprüche 1 bis 12, dadurch gekennzeichnet, daß ferner der Schlitten (8) für eine Grobeinstellung des Werkzeugs (1) an der Schlittenführung (6) linear verstellbar ist.

17. Vorrichtung nach einem der Ansprüche 1 bis 12, dadurch gekennzeichnet, daß das Werkzeug (1) als spanendes Drehwerkzeug ausgebildet ist.

18. Vorrichtung nach einem der Ansprüche 1 bis 12, dadurch gekennzeichnet, daß das Werkzeug (1) als Laser ausgebildet ist.

19. Vorrichtung nach einem der Ansprüche 1 bis 18, dadurch gekennzeichnet, daß die Einstellung des Werkzeugs (1) ferner in Abhängigkeit vom Ausgangssignal einer Oberflächenmeßeinrichtung (22) gesteuert ist, welche die vom Werkzeug (1) hergestellte Istgeometrie an der Linse erfaßt.

20. Vorrichtung nach einem der Ansprüche 1 bis 19, dadurch gekennzeichnet, daß die Stellbewegung des piezoelektrischen Antriebs (4,21) in Abhängigkeit vom Rotationswinkel der Spindel (5) um die Spindelachse (9) gesteuert ist.

## Claims

1. An apparatus for the manufacture of a contact lens having, especially, (an) aspherical front and/or rear face(s), by material-removing shaping, having a spindle (5) which is rotatably mounted in a spindle carrier (15) and in which there can be secured a lens button (2) which is rotatable about the spindle axis with the spindle (5), a material-removing tool (1) which can be displaced relative to the lens button (2), and an adjusting device (14) by means of which an adjusting movement of the tool (1) relative to the lens button (2) can be adjusted during shaping, wherein the adjusting device (14) comprises a piezoelectric drive (4, 21) which produces an adjusting movement for the tool (1) during shaping.

2. An apparatus according to claim 1, wherein the material-removing tool (1) is pivotable about a pivot axis (3) perpendicular to the spindle axis (9) and the adjusting movement of the piezoelectric drive (4, 21) for the pivot radius adjustment of the tool (1) depends on the pivot angle of the tool (1) about the pivot axis (3).

3. An apparatus according to claim 1, wherein the material-removing tool (1) is adjustable by the adjusting device (14) in the direction of and parallel to the spindle axis (9) and also in a direction perpendicular thereto, and the piezoelectric drive (4, 21) provides an adjusting movement for the material-removing tool (1) at least in the direction of and parallel to the spindle axis (9).

4. An apparatus according to any one of claims 1 to 3, wherein the piezoelectric drive (4, 21) is mounted on a slide guideway (6) on which the tool (1) is guided.

5. An apparatus according to claim 4, wherein the piezoelectric drive (4, 21) is mounted on the slide guideway (6) which is rotatable about the pivot axis (3) and on which the tool (1) is guided in a radial direction with respect to the pivot axis (3).

6. An apparatus according to claim 3 and claim 4, wherein the piezoelectric drive (4, 21) is guided on the slide guideway (6), with the material-removing tool (1), in a straight line in the direction of and parallel to the spindle axis (9) and also perpendicular thereto.

7. An apparatus according to any one of claims 1 to 6, wherein the piezoelectric drive (4, 21) comprises a piezotranslator device (4), one end of which is supported against a slide (8) which is guided on the slide guideway (6) and on which a tool holder (19) for the tool (1) is mounted, and the other end of which is supported against the tool holder (19).

8. An apparatus according to any one of claims 1 to 7, wherein the tool holder (19) is biased against the piezo-translator device (4).

9. An apparatus according to any one of claims 1 to 8, wherein the piezotranslator device (4) comprises a plurality of piezotranslators arranged one behind the other in a radial direction with respect to the pivot axis (3).

10. An apparatus according to any one of claims 1 to 9, wherein the piezoelectric drive (4, 21) comprises a piezotranslator device (21) acting directly on the tool (1).

11. An apparatus according to claim 10, wherein the piezotranslator device (21) is in the form of a tool holder.

12. An apparatus according to any one of claims 1 to 11, wherein the piezotranslator device (21) acting directly on the tool (1) is used for the fine adjustment of the tool (1), and the piezotranslator device (4) acting on the tool holder (19 or 21) is used for the coarse adjustment of the tool (1).

13. An apparatus according to any one of claims 1 to 12, wherein the tool adjustment is additionally controlled by a template.

14. An apparatus according to either claim 1 or claim 2, wherein, in order to achieve the desired geometry on the front and/or rear face(s) of the lens, the operating voltage of the piezoelectric drive (4, 21) is adjusted in dependence on the pivot angle of the tool (1) about the pivot axis (3).

15. An apparatus according to any one of claims 1 to 14, wherein a sensor (11) for the actual adjusting movement of the piezoelectric drive (4, 21) is connected to a computer unit (10), the computer unit (10) also receives and/or stores desired values of the adjusting movement which are predetermined by the desired lens geometry for respective pivot angles of the tool (1), and the operating voltage for the piezoelectric drive (4, 21) is adjusted in dependence on the comparison of the desired value and the actual value.

16. An apparatus according to any one of claims 1 to 12, wherein, in addition, the slide (8) is displaceable in linear manner on the slide guideway (6) for a coarse adjustment of the tool (1).

17. An apparatus according to any one of claims 1 to 12, wherein the tool (1) is in the form of a cutting turning tool.

18. An apparatus according to any one of claims 1 to 12, wherein the tool (1) is in the form of a laser.

19. An apparatus according to any one of claims 1 to 18, wherein the adjustment of the tool (1) is also controlled in dependence on the output signal of a surface measuring device (ii) which detects the actual geometry produced by the tool (1) on the lens.

20. An apparatus according to any one of claims 1 to 19, wherein the adjusting movement of the piezoelectric drive (4, 21) is controlled in dependence on the angle of rotation of the spindle (5) about the spindle axis (9).

## Revendications

1. Dispositif pour la réalisation d'une lentille de contact présentant en particulier une surface avant et/ou une surface arrière asphérique, par formage avec enlèvement de matière, comportant une broche (5), montée tournante dans un porte-broche (15), dans laquelle une ébauche de lentille (2) peut être fixée de manière à tourner autour de l'axe de la broche (5), avec celle-ci, comportant un outil (1) d'enlèvement de matière, réglable par rapport à l'ébauche de lentille (2) et comportant un dispositif de réglage (14) au moyen duquel il est possible de régler un déplacement de réglage de l'outil (1) par rapport à l'ébauche (2), pendant le formage, caractérisé en ce que le dispositif de réglage (14) comporte un entraînement piézo-électrique (4, 21) qui engendre un déplacement de réglage de l'outil (1), pendant le formage.

2. Dispositif selon la revendication 1, caractérisé en ce que l'outil (1) d'enlèvement de matière peut pivoter autour d'un axe de pivotement (3), perpendiculaire à l'axe (9) de la broche et le déplacement de réglage de l'entraînement piézo-électrique (4, 21) pour le réglage du rayon de pivotement de l'outil (1), dépend de l'angle de pivotement de l'outil (1) autour de l'axe de pivotement (3).

3. Dispositif selon la revendication 1, caractérisé en ce que l'outil (1) d'enlèvement de matière peut être réglé, à travers le dispositif de réglage (14), en direction de l'axe (9) de la broche et parallèlement à celui-ci ainsi que dans une direction perpendiculaire à celui-ci et en ce que l'entraînement piézo-électrique (4, 21) fournit un déplacement de réglage, au moins en direction de l'axe (9) de la broche et parallèlement à celui-ci pour l'outil (1) d'enlèvement de matière.

4. Dispositif selon l'une des revendications 1 à 3, caractérisé en ce que l'entraînement piézo-électrique (4, 21) est monté sur un dispositif de guidage de chariot (6), sur lequel est guidé l'outil (1).

5. Dispositif selon la revendication 4, caractérisé en ce que l'entraînement piézo-électrique (4, 21) est monté sur le dispositif de guidage de chariot (6), pivotant autour de l'axe de pivotement (3), contre lequel est guidé l'outil (1), dans une direction radiale par rapport à l'axe de pivotement (3).

6. Dispositif selon les revendications 3 et 4, caractérisé en ce que l'entraînement piézo-électrique (4, 21) avec l'outil (1) d'enlèvement de matière, est guidé sur le dispositif de guidage de chariot (6), en ligne droite, dans la direction de l'axe (9) de la broche et parallèlement à celui-ci ainsi que perpendiculairement à cette direction.

7. Dispositif selon l'une des revendications 1 à 6, caractérisé en ce que l'entraînement piézo-électrique (4, 21) comporte un dispositif de translation piézo-électrique (4) dont une extrémité prend appui contre un chariot (8), guidé sur le dispositif de guidage de chariot (6), chariot sur lequel est monté un porte-outil (19) pour l'outil (1), et dont l'autre extrémité prend appui contre le porte-outil (19).

8. Dispositif selon l'une des revendications 1 à 7, caractérisé en ce que le porte-outil (19) prend appui, sous précontrainte, contre le dispositif de translation piézo-électrique (4).

9. Dispositif selon l'une des revendications 1 à 8, caractérisé en ce que le dispositif de translation piézo-électrique (4) est constitué de plusieurs translateurs piézo-électriques disposés les uns derrière les autres radialement par rapport à l'axe de pivotement (3).

10. Dispositif selon l'une des revendications 1 à 9, caractérisé en ce que l'entraînement piézo-électrique (4, 21) comporte un dispositif de translation piézo-électrique (21), agissant directement sur l'outil (1).

11. Dispositif selon la revendication 10, caractérisé en ce que le dispositif de translation piézo-électrique (21) est conçu sous la forme d'un porte-outil.

12. Dispositif selon l'une des revendications 1 à 11, caractérisé en ce que le dispositif de translation piézo-électrique (21), agissant directement sur l'outil (1), sert au réglage fin de l'outil (1) et le dispositif de translation piézo-électrique (4), agissant sur le porte-outil (19 ou 21), sert au réglage grossier de l'outil (1).

13. Dispositif selon l'une des revendications 1 à 12, caractérisé en ce que le réglage de l'outil est commandé en plus par un gabarit.

14. Dispositif selon l'une des revendications 1 ou 2, caractérisé en ce que pour obtenir la géométrie voulue sur la surface avant et/ou la surface arrière de la lentille, la tension de service du mécanisme d'entraînement piézo-électrique (4, 21) est réglée en fonction de l'angle de pivotement de l'outil (1) autour de l'axe de pivotement (3).

15. Dispositif selon l'une des revendications 1 à 14, caractérisé en ce qu'un capteur (11) pour le déplacement de réglage réel du mécanisme d'entraînement piézo-électrique (4, 21) est connecté à une unité de calcul (10), en ce que l'unité de calcul (10) reçoit ou mémorise en outre une valeur de consigne du déplacement de réglage, imposée par la géométrie souhaitée pour la lentille pour les angles de pivotement respectifs de l'outil (1), et en ce que la tension de service pour le mécanisme d'entraînement piézo-électrique (4, 21) est réglée en fonction de la comparaison entre la valeur de consigne et la valeur réelle.

16. Dispositif selon l'une des revendications 1 à 12, caractérisé en ce que le chariot (8) est en outre déplaçable linéairement sur le dispositif de guidage de chariot (6), pour un réglage grossier de l'outil (1).

17. Dispositif selon l'une des revendications 1 à 12, caractérisé en ce que l'outil (1) est un outil tournant d'enlèvement de copeaux.

18. Dispositif selon l'une des revendications 1 à 12, caractérisé en ce que l'outil (1) est un laser.

19. Dispositif selon l'une des revendications 1 à 18, caractérisé en ce que le réglage de l'outil (1) est en outre commandé en fonction du signal de sortie d'un dispositif de mesure de surface (22) qui détecte sur la lentille la géométrie réelle, réalisée par l'outil (1).

20. Dispositif selon l'une des revendications 1 à 19, caractérisé en ce que le déplacement de réglage du mécanisme d'entraînement piézo-électrique (4, 21) est commandé en fonction de l'angle de rotation de la broche (5) autour de l'axe (9) de la broche.
